# EUROPÄISCHE PATENTSCHRIFT

(11) **EP 1 610 064 B1**
(45) Veröffentlichungstag und Bekanntmachung des Hinweises auf die Patenterteilung: **23.11.2011**
(21) Anmeldenummer: 05012480.9
(22) Anmeldetag: 10.06.2005
(51) Int. Cl.: F24D 3/14, E04C 2/52

(54) **Betonkerntemperierungsmodul sowie Herstellugsverfahren für ein Betonkerntemperierungsmodul**
Concrete core tempering module and manufacturing process of a concrete core tempering module
Module de conditionnement d'un élément de construction en béton et procédé de fabrication d'un module de conditionnement d'un élément de construction en béton

(30) Priorität: 23.06.2004 DE 102004030399
(43) Veröffentlichungstag der Anmeldung: 28.12.2005
(73) Patentinhaber: REHAU AG + Co, 95111 Rehau (DE)
(72) Erfinder: Kübler, Rainer, Ross-on-Wye Herefordshire (GB)

(56) Entgegenhaltungen:
- EP-A- 1 422 356
- EP-A2- 1 669 681
- WO-A-2004/059216
- DE-A1- 19 848 561
- DE-U1- 20 304 586

## Beschreibung

Die Erfindung betrifft ein Betonkerntemperierungsmodul nach dem Oberbegriff des Anspruches 1. Außerdem betrifft die Erfindung ein Verfahren zur Herstellung eines Betonkerntemperierungsmoduls nach dem Oberbegriff des Anspruches 5.

Ein Betonkerntemperierungsmodul (= BKT-Modul) oder eine Elementdecke mit integriertem BKT-Modul wird beispielsweise zum Aufbau einer im Bereich von Einfamilien-, Büro- oder Verwaltungsgebäuden zum Einsatz kommenden Betondecke verwendet. Verglichen mit einer Standard-Elementdecke beinhaltet ein derartiges BKT-Modul zusätzlich eine Verrohrung, mittels derer die Element- oder Betondecke später entweder beheizt oder gekühlt werden kann.

Ein BKT-Modul gemäß dem Oberbegriff von Anspruch 1, sowie dessen Herstellung sind aus der DE 198 48 561 A1 bekannt. Das beschriebene BKT-Modul hat eine zwischen zwei gitterförmigen Bewehrungsmatten angeordnete Verrohrung. Aufgrund der beiden Bewehrungsmatten und eines zusätzlichen Abstandshalters resultiert eine relativ große Gesamthöhe von etwa 80 mm, sodass die auf eine maximale Höhe von etwa 70 mm ausgelegten Standard-Produktionspaletten für Elementdecken nicht verwendet werden können.

Ein anderes BKT-Modul wird in der DE 200 17 369 U1 beschrieben. Es beinhaltet eine mäanderförmige Verrohrung aus Rohrleitungen, deren Verlegeabstand an den Gitterabstand der Bewehrungsmatte angepasst ist. Um alle Anwendungsfälle bedienen zu können, ist eine Bevorratung vieler verschiedener Bewehrungsmatten erforderlich, wenn nicht mit überoder unterdimensionierten Bewehrungsmatten gearbeitet wird. Letzteres hat aber einen zu hohen Stahlanteil bzw. eine Nachrüstung mit zusätzlichen Stabstählen zur Folge.

Weiterhin ist mit der DE 100 33 792 C1 eine komplette Betonplatte mit einer zwischen zwei Bewehrungen angeordneten selbsttragenden Verrohrung offenbart. Letztere beinhaltet sich kreuzende Rohrabschnitte, die zu einem höheren Gesamtaufbau führen, sodass Standard-Produktionspaletten beim Einsatz dieses Verrohrungs-Prinzips ungeeignet sind.

Auch die nach dem Anmeldedatum veröffentlichte WO 04/059216 offenbart ein vorgefertigtes Bauelement, insbesondere Decken- oder Wandbauelement aus einem ausgehärteten Material sowie ein Verfahren zur Herstellung eines solchen Bauelements. Zum einfachen und schnellen Fertigstellen eines Wand-, Boden- oder Deckenabschnittes wird dazu ein Bauelement vorgeschlagen, das mit einem einzigen Rohrleitungssystem zum Führen eines Kühl- oder Heizmediums umfassend ein metallenes Trägergitter mit daran befestigten Rohrleitungen, die keine Kreuzungspunkte mit den aus dem Bauelement hervorstehenden Gitterträger aufweisen, wobei das Trägergitter derart positioniert und/oder ausgelegt ist, dass es die alleinige Bewehrung oder einen Teil der Bewehrung des Bauelements oder eines daraus hergestellten Fertigbauteils bildet.

Der Erfindung liegt die Aufgabe zugrunde, ein Betonkerntemperierungsmodul der gattungsgemäßen Art so anzugeben, dass es sich wirtschaftlich herstellen lässt.

Diese Aufgabe wird erfindungsgemäß durch ein Betonkerntemperierungsmodul entsprechend den Merkmalen des Anspruchs 1 gelöst. Indem als Bewehrung keine Gittermatte, sondern ein Gitter aus Einzel-Stabstählen verwendet wird, erübrigt sich eine wirtschaftlich unrentable Lagerhaltung vieler verschiedener Gittermatten. Die Auslegung der Bewehrung richtet sich ausschließlich nach den statischen Anforderungen. Im Unterschied zu einem vergleichsweise unwirtschaftlichem BKT-Modul mit über- oder unterdimensionierten Bewehrungsmatten enthält das erfindungsgemäße BKT-Modul genau die Menge an Stabstahl, die aus statischen Gründen erforderlich ist. Die Bewehrung aus Einzel-Stabstählen kann entweder manuell oder insbesondere auch vollautomatisch in industriellem Maßstab erfolgen. Letzteres ist besonders kostengünstig. Dank der Einzel-Stabstähle entfällt außerdem die beim Einsatz von Gittermatten in den Produktionspaletten notwendige rechenförmige seitliche Abschalung, die in der Handhabung, insbesondere in der Reinigung, relativ aufwendig ist. Einzel-Stabstähle können demgegenüber im Randbereich problemlos gekröpft und auf eine durchgehende seitliche Abschalung aufgelegt werden.

Weiterhin resultiert aufgrund des im Wesentlichen unmittelbaren Anliegens der Verrohrung und des mindestens einen Gitterträgers an der Bewehrung eine niedrige Aufbauhöhe, sodass eine Standard-Produktionspalette zum Einsatz kommen kann. Hierbei ist es unerheblich, dass beispielsweise wegen der sich kreuzenden Einzel-Stabstähle oder der zum Aufbau der Verrohrung eingesetzten Abstandselemente an manchen Stellen kein unmittelbarer Kontakt zwischen der Verrohrung und dem mindestens einen Gitterträger einerseits und der Bewehrung andererseits besteht.

Das kreuzungsfreie und (eigen-)formstabile Rohrregister ermöglicht zum einen eine niedrige Aufbauhöhe und zum anderen einen Transport des vorgefertigten Rohrregisters über eine gewisse Distanz. Letzteres ist insbesondere dann von Interesse, wenn das Rohrregister an einem anderen Ort als der Fertigungsstätte des BKT-Moduls vorgefertigt wird. Insbesondere kann diese Vorfertigung auch durch einen spezialisierten Zulieferer erfolgen.

Insgesamt ermöglicht das erfindungsgemäße, insbesondere für eine Elementdecke bestimmte BKT-Modul also eine besonders wirtschaftliche Produktionsweise.

Vorteilhafte Ausgestaltungen des erfindungsgemäßen Betonkerntemperierungsmoduls ergeben sich aus den von Anspruch 1 abhängigen Unteransprüchen.

Die Varianten gemäß der Ansprüche 2 und 3 führen zu einer besonders hohen (Eigen) Formstabilität des Rohrregisters.

Weiterhin liegt der Erfindung die Aufgabe zugrunde, ein Verfahren der gattungsgemäßen Art so anzugeben, dass es sich besonders wirtschaftlich durchführen lässt.

Diese Aufgabe wird erfindungsgemäß durch ein Verfahren mit den Merkmalen gemäß Anspruch 4 gelöst. In Ergänzung zu den im Zusammenhang mit dem BKT-Modul bereits beschriebenen Vorteilen zeichnet sich das Verfahren zusätzlich durch die Verwendung der Mehrwegträgermatte aus. Aufgrund der Fixierung an dieser Mehrwegträgermatte kann das vorgefertigte Rohrregister im Prinzip über eine beliebige Entfernung bis zum Fertigungsort des BKT-Moduls transportiert werden, ohne dass dadurch Form und Eigenschaften des vorgefertigten Rohrregisters in Mitleidenschaft gezogen werden. Denkbar ist ein Transport auf dem gleichen Firmengelände, aber auch ein Transport von einem lokalen entfernt angesiedelten Zulieferer.

Mittels der Mehrwegträgermatte lässt sich das vorgefertigten Rohrregister leicht und insbesondere automatisiert in seiner Endposition bezüglich der Bewehrung platzieren. Dies gilt insbesondere für die beiden seitlichen Richtungen. Nach Entfernen der Mehrwegträgermatte sind allenfalls noch geringfügige seitliche Positionskorrekturen des Rohrregisters erforderlich. Die Verwendung der Mehrwegträgermatte ermöglicht eine weitgehend automatisierte Fertigung des BKT-Moduls. Vor dem Vergießen mit dem Beton wird die Mehrwegträgermatte entfernt und steht zur Herstellung eines weiteren Rohrregisters zur Verfügung. Insgesamt zeichnet sich also auch das erfindungsgemäße Verfahren durch eine besondere Wirtschaftlichkeit aus.

Vorteilhafte Ausgestaltungen des erfindungsgemäßen Verfahrens ergeben sich aus den von Anspruch 4 abhängigen Unteransprüchen.

Gemäß den Varianten nach Anspruch 5 und 6 kann das Einbringen des zumindest einen Gitterträgers und der Verrohrung in beliebiger Reihenfolge erfolgen.

Die Auswahl der im jeweiligen Einzelfall günstigeren Reihenfolge kann anhand der Vorgaben des übrigen Herstellungsprozesses erfolgen. Beide Alternativen lassen sich mit einem manuellen oder auch einem automatisierten Fertigungsverfahren in Einklang bringen.

Die Varianten gemäß den Ansprüchen 7 und 8 führen zu einem besonders formstabilen Rohrregister.

Die Maßnahme gemäß Anspruch 9 verhindert ein Aufschwimmen des Rohrregisters während oder nach dem Eingießen mit Beton. Bevorzugt erfolgt die Fixierung in Umlenkbereichen, da sich an dieser Stelle andere Sicherungsmaßnahmen, wie z. B. die im Bereich gerader Rohrleitungen eingesetzten Abstandshalterclips, nicht ohne weiteres verwenden lassen.

Weitere Ausgestaltungen und Vorteile der Erfindung ergeben sich aus der nachfolgenden Beschreibung von Ausführungsbeispielen eines BKT-Moduls und seiner Herstellung anhand der Zeichnung. Es zeigen:
- Fig. 1: einen Querschnitt durch ein noch in einer Produktionspalette befindliches Be- tonkerntemperierungsmodul,
- Fig. 2: eine in dem Betonkerntemperierungsmodul gemäß Fig. 1 eingesetzte Verroh- rung,
- Fig. 3: einen zur Sicherung des Verlegeabstands der Verrohrung gemäß Fig. 2 einge- setzten Abstandshalterclip,
- Fig. 4: eine vereinfachte Draufsicht des Betonkerntemperierungsmoduls gemäß Fig. 1,
- Fig. 5: einen Längsschnitt durch einen im Betonkerntemperierungsmodul gemäß Fig. 1 eingesetzten Gitterträger und
- Fig. 6: eine vorgefertigte, auf einer Mehrwegträgermatte fixierte Verrohrung.

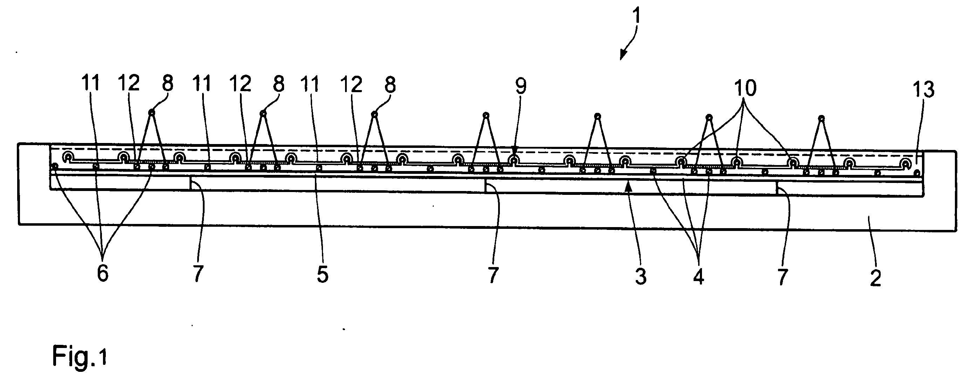

Einander entsprechende Teile sind in den Figuren 1 bis 6 mit denselben Bezugszeichen versehen.

Anhand der Figuren 1 bis 5 wird ein Ausführungsbeispiel eines Betonkerntemperierungsmoduls (= BKT-Modul) 1 für eine Elementdecke veranschaulicht. In Figur 1 ist das BKT-Modul 1 in einer Querschnittsdarstellung abgebildet. Es befindet sich noch in einer Standard-Produktionspalette 2, die eine üblicherweise für die Fertigung von Elementdecken vorgesehene Tiefe von etwa 70 mm aufweist.

Das BKT-Modul 1 beinhaltet eine Bewehrung 3, die sich aus Einzel-Stabstählen 4 zusammensetzt. Ein Teil der Einzel-Stabstähle 4 bildet eine Querbewehrung 5, der andere Teil eine Längsbewehrung 6, sodass die Bewehrung 3 insgesamt die Gestalt eines Gitters annimmt.

Zwischen der inneren Bodenwand der Produktionspalette 2 und der Bewehrung 3 befinden sich Abstandshalter 7, auf die die Bewehrung 3 während des Fertigungsvorgangs aufgelegt wird, und mittels derer die Bewehrung 3 vor dem Umgießen mit Beton in einem gewissen Abstand, der in der Regel mindestens 20 mm beträgt, von der inneren Bodenwand der Produktionspalette 2 gehalten wird. Bevorzugt sind die Abstandshalter 7 an der Querbewehrung 5 vorkonfektioniert.

Auf der den Abstandshaltern 7 abgewandten Seite der Bewehrung 3 liegen mehrere, einen dreieckigen Querschnitt aufweisende Gitterträger 8 auf der Querbewehrung 5 auf. Auf der gleichen Seite ist auch eine Verrohrung 9 mit Rohrleitungen 10 und Abstandshalterclips 11 und 12 angeordnet, wobei zwischen benachbarten Rohrleitungen 10 zur Sicherung des Verlegeabstands die Abstandshalterclips 11 und 12 vorgesehen sind. Die Gitterträger 8 befinden sich im Wesentlichen in unmittelbarem Kontakt mit der Querbewehrung 5. Die Verrohrung 9 befindet sich an mehreren Stellen in unmittelbarem Kontakt mit der Längsbewehrung 6.

In die Produktionspalette 2 ist bis zu einer mittels der gestrichelten Linie angedeuteten Höhe Beton eingegossen, sodass sich eine Betonschicht 13 bildet. Die Bewehrung 3 und auch die Verrohrung 9 sind praktisch vollständig von der Betonschicht 13 umschlossen.

Ausnahmen bilden die aus der Querschnittsdarstellung gemäß Figur 1 nicht hervorgehenden Überstände bzw. Zuführungen im Randbereich. Dagegen ragen die Gitterträger 8 teilweise aus der Betonschicht 13 heraus.

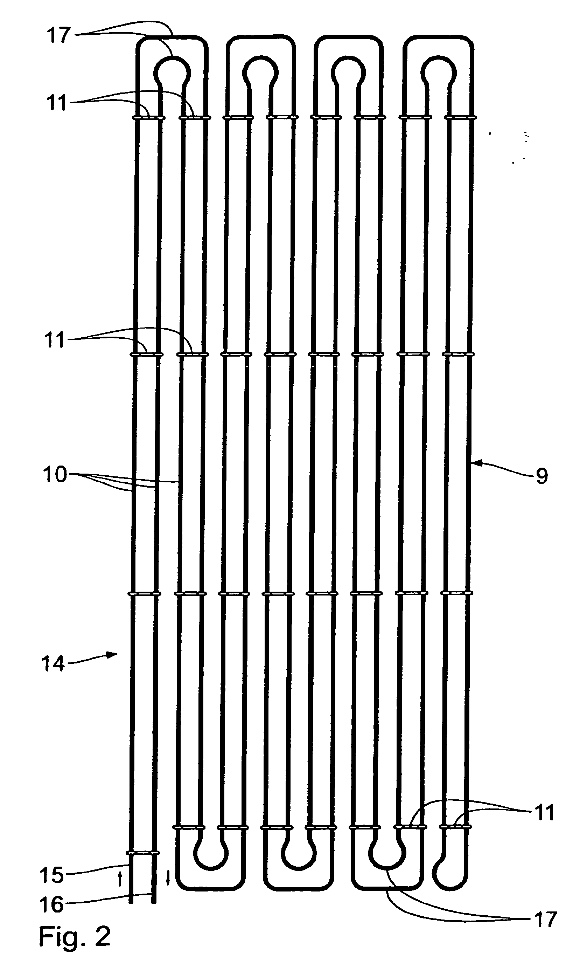

Die Verrohrung 9 liegt, wie aus der Darstellung nach Figur 2 ersichtlich, in Gestalt eines doppelmäanderförmigen Rohrregisters 14 vor. Grundsätzlich ist aber auch eine andere Ausgestaltung, beispielsweise als Einfachmäander, möglich. Das Rohrregister 14 ist mit einem Vorlauf 15 und einem Rücklauf 16 versehen. Innerhalb jedes Einzelmäanders ist jeweils ein an einer Längsseite angeordneter Umlenkbereich 17 mit einer 180°-Richtungsumkehr vorgesehen. Die Einzelmäander des für Hin- und Rückrichtung jeweils vorgesehenen Teils des Rohrregisters 14 haben abwechselnd einen ein- bzw. dreifachen Verlegeabstand. Die in Hin- und Rückrichtung vorgesehenen Einzelmäander greifen ineinander, sodass sich zwischen den in Längsrichtung verlaufenden Rohrleitungen 10 jeweils ein einfacher Verlegeabstand ergibt. Dessen Einhaltung wird durch die Abstandshalterclips 11 gewährleistet, die zwischen benachbarten Rohrleitungen 10, von denen eine zum hinführenden Teil und eine zum zurückführenden Teil des Rohrregisters 14 gehört, angeordnet sind.

Das Rohrregister 14 ist mit einem formstabilen Rohrmaterial aufgebaut, sodass es auch insgesamt in seiner Mäanderform eine Eigenformstabilität aufweist. Als Rohrmaterial kommt beispielsweise ein Metall-Kunststoff-Verbundrohr zum Einsatz. Das Rohrregister 14 kann entweder komplett aus diesem vorteilhaften Rohrmaterial bestehen oder nur in den hinsichtlich der Formstabilität besonders bedeutsamen Umlenkbereichen 17. Alternativ kann auch ein durchgehendes flexibles Rohr, beispielsweise aus Kunststoff, verwendet werden, das mittels zusätzlich vorgesehener und insbesondere aufgeclipster (Kunststoff-) Formelemente, beispielsweise als stabilisierende Längsstücke oder als 90°- oder 180°-Bogenstücke, in der gewünschten Position gehalten wird.

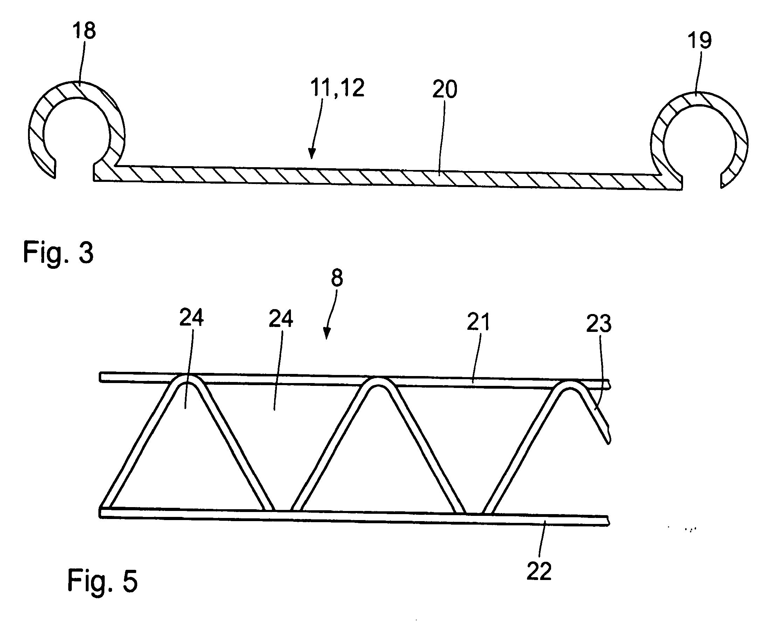

Die Formstabilität wird durch die Abstandshalterclips 11 und 12 erhöht. Gemäß Figur 3 beinhalten die Abstandshalterclips 11 und 12 jeweils zwei offene Klemmringe 18 und 19, die mittels eines den Verlegeabstand bestimmenden Verbindungsstegs 20 miteinander verbunden sind. Der an den Öffnungen der Klemmringe 18 und 19 angelenkte Verbindungssteg 20 ist außermittig angeordnet, sodass die aus Figur 1 ersichtliche unmittelbare Positionierung der Verrohrung 9 auf der Bewehrung 3 gewährleistet ist.

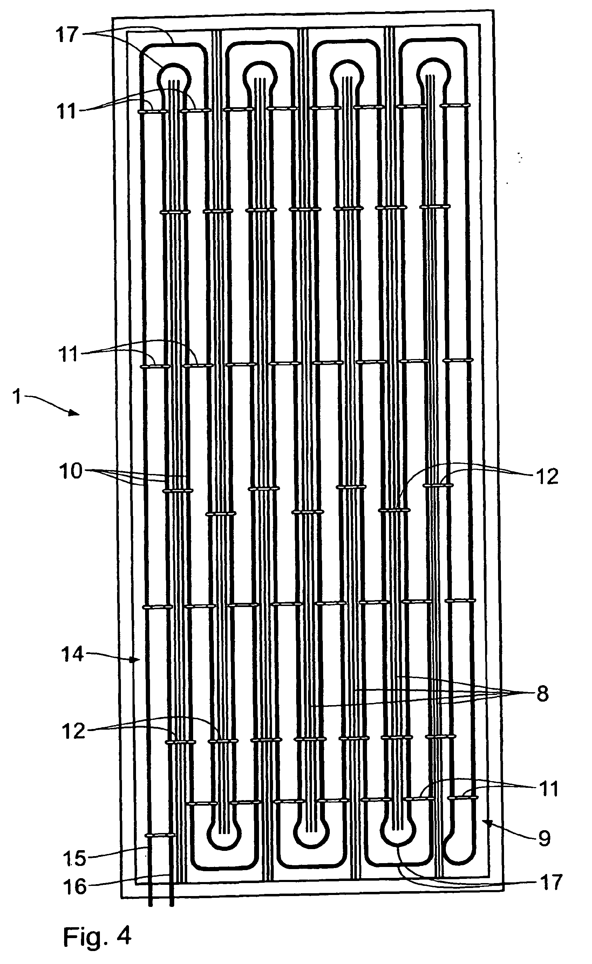

Aus der vereinfachten Draufsicht gemäß Figur 4 ist die relative Positionierung der Verrohrung 9 und der Gitterträger 8 zueinander zu entnehmen. Zur besseren Übersichtlichkeit fehlen in Figur 4 die Betonschicht 13 und die Bewehrung 3. Das Rohrregister 14 der Verrohrung 9 ist so um die Gitterträger 8 herum verlegt, dass jeweils ein Gitterträger 8 in einen Einzelmäander des Rohrregisters 14 von dessen Öffnungsseite her eingreift und innerhalb dieses Einzelmäanders bis zu dessen Umlenkbereich 17 heranreicht. Wie aus den Darstellungen gemäß Figur 1 und 4 ersichtlich ist, greifen die Abstandshalterclips 12 durch die Gitterträger 8 hindurch.

In Figur 5 ist ein Längsschnitt durch einen Gitterträger 8 dargestellt. Der Gitterträger 8 verfügt über einen oberen Längsstab 21 und zwei untere Längsstäbe 22. Jeder untere Längsstab 22 ist mit dem oberen Längsstab 21 mittels eines Zickzack-förmigen Seitenelements 23 verbunden. Aufgrund der Zick-Zack-Form ergeben sich in den Seitenelementen 23 Zwischenräume 24, durch die die Abstandshalterclips 12 hindurchgeführt sind.

Im Folgenden wird die Herstellung des BKT-Moduls 1 näher erläutert.

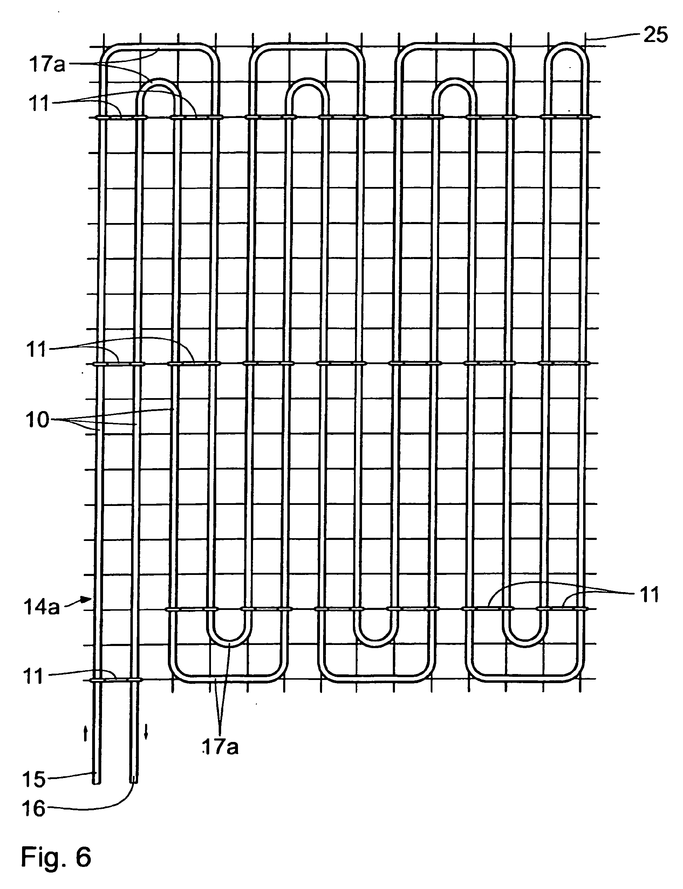

Das formstabile Rohrregister 14 wird gesondert hergestellt. Zur Sicherung des Verlegeabstands werden auch die Abstandshalterclips 11 bereits im Zuge dieser Vorfertigung angebracht. Das Rohrregister 14 wird an einer aus Figur 6 ersichtlichen Mehrwegträgermatte 25, die beispielsweise aus Baustahl besteht, fixiert. In Figur 6 ist ein Rohrregister 14a, das verglichen mit dem in den Figuren 2 und 4 gezeigten Rohrregister 14 geringfügig andere Umlenkbereiche 17a aufweist, nach seiner Fixierung auf der Mehrwegträgermatte 25 dargestellt. Der Gitterabstand der Mehrwegträgermatte 25 muss nicht notwendigerweise mit dem Verlegeabstand zwischen den Rohrleitungen 10 übereinstimmen.

Die beispielsweise mittels Matten- oder Kabelbindern ausgebildete Fixierung des Rohrregisters 14a auf der Mehrwegträgermatte 25 ermöglicht einen Transport des vorgefertigten Rohrregisters 14a zur Fertigungsstätte des BKT-Moduls 1. Aufgrund der stabilisierenden Mehrwegträgermatte 25 ist das Rohrregister 14a während des Transports vor einer Beschädigung geschützt.

An der Fertigungsstelle des BKT-Moduls 1 wird insbesondere die statische Bewehrung 3 aus den Einzel-Stabstählen 4 entsprechend den statischen Anforderungen erstellt. Dies kann manuell oder insbesondere auch vollautomatisiert erfolgen.

Je nach Bedarf können die Einzel-Stabstähle 4 auch miteinander verschweißt werden. Die Wahl der Stärke der Einzel-Stabstähle 4 und der Gitterabstände der Bewehrung 3 erfolgt dabei ausschließlich entsprechend den statischen Anforderungen. Das Rohrregister 14 oder 14a bleibt hierbei unberücksichtigt, sodass die Bewehrung 3 im Allgemeinen Gitterabstände aufweist, die sich vom Verlegeabstand des Rohrregisters 14 oder 14a unterscheiden. Diese Unabhängigkeit ermöglicht eine einfache und flexible Anpassung des BKT-Moduls 1 sowohl an die unterschiedlichsten statischen Anforderungen als auch an die Anforderungen der Temperierung. Insbesondere wird auch eine unwirtschaftliche Über- oder Unterdimensionierung der Bewehrung 3 aufgrund von Anforderungen, die durch das Rohrregister 14 oder 14a begründet sind, vermieden.

Anschließend werden die Gitterträger 8 auf die Querbewehrung 5 aufgestellt. Hierbei wird der Abstand zwischen den Gitterträgern 8 an den Verlegeabstand des Rohrregisters 14 oder 14a angepasst. Auch das Einbringen der Gitterträger 8 kann entweder manuell oder vollautomatisch erfolgen.

Die Mehrwegträgermatte 25, an der das Rohrregister 14a fixiert ist, wird dann mit unten liegendem Rohrregister 14a auf die Gitterträger 8 gelegt. Die Fixierung zwischen der Mehrwegträgermatte 25 und dem Rohrregister 14a wird gelöst, sodass das Rohrregister 14a auf die Bewehrung 3 herunterfällt. Aufgrund der (Eigen-)Formstabilität behält das Rohrregister 14a auch nach dem Lösen von der Mehrwegträgermatte 25 seine mäanderförmige Gestalt bei. Die Mehrwegträgermatte 25 wird entfernt und kann für die Fertigung und den Transport eines weiteren Rohrregisters 14 oder 14a verwendet werden.

Die Abstandshalterclips 12, die durch die Zwischenräume 24 der Gitterträger 8 hindurchgreifen, werden anschließend angebracht. Im Unterschied zu den Abstandshalterclips 11, die bereits im Zuge der Vorfertigung des Rohrregisters 14 oder 14a angebracht werden können, erfolgt die Montage der Abstandshalterclips 12 also erst, nachdem die Gitterträger 8 und das Rohrregister 14 oder 14a auf der Bewehrung 3 positioniert worden sind. Außerdem wird das Rohrregister 14 oder 14a beispielsweise mittels eines einfachen Rohrbinders punktuell an der Bewehrung 3 fixiert, um ein Aufschwimmen im flüssigen Beton zu verhindern.

Danach erfolgt das Vergießen mit Beton. Nach Abschluss der Betonaushärtung ist das BKT-Modul 1 fertiggestellt. Vorteilhaft ist, dass die komplette Bewehrung 3 mit Beton umschlossen ist. Dadurch wird insbesondere ein hoher Korrosionsschutz erreicht.

Es kann dann zu einer Baustelle transportiert und als Deckenelement montiert werden. Auf der Baustelle wird eine auf den Gitterträgern 8 aufliegende obere Bewehrung erstellt. Abschließend wird das gesamte Element nochmals mit Beton vergossen. Alternativ kann das fertiggestellte BKT-Modul 1 auch unmittelbar als Kühl-/Heizpaneel verwendet werden. Hierzu braucht es beispielsweise nur unter eine bestehende Decke gehängt zu werden. Außer einem Anschluss des Verlaufs 15 und des Rücklaufs 16 sind keine weiteren wesentlichen Arbeiten erforderlich, insbesondere kein Anbringen einer oberen Bewehrung und kein zweites Vergießen mit Beton.

Die Verwendung der Mehrwegträgermatte 25 kommt einer weitgehend automatisierten und damit besonders wirtschaftlichen Fertigung des BKT-Moduls 1 besonders entgegen. Die statische Bewehrung 3 und das Rohrregister 14 bzw. 14a lassen sich weitgehend unabhängig voneinander und insbesondere auch nur entsprechend der jeweiligen maßgeblichen statischen bzw. thermischen Anforderungen dimensionieren und herstellen. Eine planerische Abstimmung ist nur hinsichtlich der Positionierung der Gitterträger 8 erforderlich. Dieser Aufwand ist jedoch überschaubar. Die Gitterträger 8 können unter Berücksichtigung von Vorgaben, die sich aufgrund des jeweils eingesetzten Rohrregisters 14 oder 14a ergeben, dennoch vollautomatisiert auf der Bewehrung 3 platziert werden.

Die Reihenfolge, in der das Rohrregister 14 oder 14a und die Gitterträger 8 auf der Bewehrung 3 positioniert werden, ist beliebig. Im Unterschied zu der vorstehend beschriebenen Fertigungsabfolge ist es also auch möglich, zunächst das Rohrregister 14a auf der statischen Bewehrung 3 zu platzieren, die Mehrwegträgermatte 25 zu entfernen, und erst danach die Gitterträger 8 einzubringen. Auch in dieser Abfolge bleiben die Vorteile des Herstellungsverfahrens, die im Wesentlichen auf der Verwendung einer formstabilen Verrohrung 9 und der Mehrwegträgermatte 25 beruhen, erhalten.

## Patentansprüche

1. Betonkerntemperierungsmodul mit
a) einer statischen Bewehrung (3),
b) mindestens einem Gitterträger (8),
c) einer Verrohrung (9) zur Temperierung und
d) einer den mindestens einen Gitterträger (8) teilweise umgebenden Betonschickt (13),
wobei
e) die Bewehrung (3) als Gitter aus einzelnen Stabstählen (4) ausgebildet ist, wobei eine Stabstärke der Stabstähle (4) und ein Gitterabstand des Gitters entsprechend den statischen Anforderungen ausgelegt sind,
f) die Verrohrung (9) als kreuzungsfreies, formstabiles Rohrregister (14; 14a) ausgebildet ist, **dadurch gekennzeichnet, dass**
g) die Verrohrung (9) und der mindestens eine Gitterträger (8) an einer gleichen Seite der Bewehrung (3) im Wesentlichen unmittelbar an der Bewehrung (3) anliegen, und
h) das Rohrregister (14; 14a) in Umlenkbereichen (17; 17a), in denen eine Rohrleitung (10) des Rohrregisters (14; 14a) eine Richtungsänderung aufweist, abschnittsweise stabilisierende Formelemente aufweist.

2. Betonkerntemperierungsmodul nach Anspruch 1, **dadurch gekennzeichnet, dass** das Rohrregister (14; 14a) benachbarte Rohrleitungen (10) beinhaltet und zur Sicherung eines Verlegeabstands zwischen den benachbarten Rohrleitungen (10) Abstandshalterclips (11, 12) angeordnet sind.

3. Betonkerntemperierungsmodul nach Anspruch 2, **dadurch gekennzeichnet, dass** die zwischen benachbarten Rohrleitungen (10) angeordneten Abstandshalterclips (12) durch freie Zwischenräume (24) des Gitterträgers (8) hindurchgeführt sind.

4. Verfahren zur Herstellung eines Betonkerntemperierungsmoduls, bei dem
a) eine statische Bewehrung (3) hergestellt wird,
b) mindestens ein Gitterträger (8) auf der statischen Bewehrung (3) platziert wird,
c) eine Verrohrung (9) zur Temperierung auf der statischen Bewehrung (3) platziert wird, und
d) die statische Bewehrung (3), die Verrohrung (9) und der mindestens eine Gitterträger (8) mit Beton vergossen werden, so dass der mindestens eine Gitterträger (8) teilweise aus dem Beton hervorsteht, wobei
e) die Bewehrung (3) als Gitter aus einzelnen Stabstählen (4) hergestellt wird, wobei Stabstärken der Stabstähle (4) und Gitterabstände des Gitters entsprechend den statischen Anforderungen dimensioniert werden,
f) die Verrohrung (9) als formstabiles Rohrregister (14; 14a) hergestellt und an einer Mehrwegträgermatte (25) fixiert wird,
g) das an der Mehrwegträgermatte (25) fixierte Rohrregister (14; 14a) zur Bewehrung (3) transportiert und über oder auf der Bewehrung (3) angeordnet wird, und
h) die Mehrwegträgermatte (25) vom Rohrregister (14; 14a) gelöst und entfernt wird.

5. Verfahren nach Anspruch 4, **dadurch gekennzeichnet, dass** der mindestens eine Gitterträger (8) in der zeitlichen Abfolge vor der Verrohrung (9) auf der Bewehrung (3) platziert wird.

6. Verfahren nach Anspruch 4, **dadurch gekennzeichnet, dass** die Verrohrung (9) in der zeitlichen Abfolge vor dem mindestens einen Gitterträger (8) auf der Bewehrung (3) platziert wird.

7. Verfahren nach Anspruch 4, **dadurch gekennzeichnet, dass** benachbarte Rohrleitungen (10) des Rohrregisters (14; 14a) in ihrem Verlegeabstand zueinander gesichert werden.

8. Verfahren nach Anspruch 7, **dadurch gekennzeichnet, dass** die Sicherung des Verlegeabstands zumindest teilweise **dadurch** vorgenommen wird, dass Abstandshalterclips (12) durch freie Zwischenräume (24) des Gitterträgers (8) hindurchgeführt und an längs zu beiden Seiten des Gitterträgers (8) verlaufenden Rohrleitungen (10) befestigt werden.

9. Verfahren nach Anspruch 4, **dadurch gekennzeichnet, dass** das Rohrregister (14; 14a) insbesondere in Umlenkbereichen (17; 17a), in denen jeweils eine Rohrleitung (10) des Rohrregisters (14; 14a) eine Richtungsänderung aufweist, an der Bewehrung (3) fixiert wird.

## Claims

1. Concrete core temperature control module comprising
a) a static reinforcement (3),
b) at least one lattice beam (8),
c) a pipe system (9) for temperature control, and
d) a concrete layer (13) partially surrounding the at least one lattice beam (8), wherein
e) the reinforcement (3) is designed as a grid consisting of individual steel bars (4), wherein a bar thickness of the steel bars (4) and a grid spacing of the grid are designed to correspond to the static requirements,
f) the pipe system (9) is designed as a non-crossing, dimensionally stable pipe bank (14; 14a), **characterized in that**
g) the pipe system (9) and the at least one lattice beam (8) bear substantially directly against the reinforcement (3) on the same side of the reinforcement (3), and
h) the pipe bank (14; 14a) has stabilizing shape elements in certain portions in deflection regions (17; 17a) in which a pipeline (10) of the pipe bank (14; 14a) has a change of direction.

2. Concrete core temperature control module according to Claim 1, **characterized in that** the pipe bank (14; 14a) contains adjacent pipelines (10), and spacer clips (11, 12) are arranged between the adjacent pipelines (10) in order to secure a laying spacing.

3. Concrete core temperature control module according to Claim 2, **characterized in that** the spacer clips (12) arranged between adjacent pipelines (10) are guided through free interspaces (24) of the lattice beam (8).

4. Method for producing a concrete core temperature control module, in which
a) a static reinforcement (3) is produced,
b) at least one lattice beam (8) is placed on the static reinforcement (3),
c) a pipe system (9) for temperature control is placed on the static reinforcement (3), and
d) concrete is poured onto the static reinforcement (3), the pipe system (9) and the at least one lattice beam (8) such that the at least one lattice beam (8) protrudes partially from the concrete, wherein
e) the reinforcement (3) is produced as a grid consisting of individual steel bars (4), wherein bar thicknesses of the steel bars (4) and grid spacings of the grid are dimensioned to correspond to the static requirements,
f) the pipe system (9) is produced as a dimensionally stable pipe bank (14; 14a) and is fixed on a reusable carrier mat (25),
g) the pipe bank (14; 14a) fixed on the reusable carrier mat (25) is transported to the reinforcement (3) and arranged over or on the reinforcement (3), and
h) the reusable carrier mat (25) is released from the pipe bank (14; 14a) and removed.

5. Method according to Claim 4, **characterized in that** the at least one lattice beam (8) is placed, in the time sequence, before the pipe system (9) on the reinforcement (3).

6. Method according to Claim 4, **characterized in that** the pipe system (9) is placed, in the time sequence, before the at least one lattice beam (8) on the reinforcement (3).

7. Method according to Claim 4, **characterized in that** adjacent pipelines (10) of the pipe bank (14; 14a) are secured in their laying spacing with respect to one another.

8. Method according to Claim 7, **characterized in that** the laying spacing is at least partially secured **in that** spacer clips (12) are guided through free interspaces (24) of the lattice beam (8) and fastened to pipelines (10) extending longitudinally on both sides of the lattice beam (8).

9. Method according to Claim 4, **characterized in that** the pipe bank (14; 14a) is fixed to the reinforcement (3) in particular in deflection regions (17; 17a) in which in each case a pipeline (10) of the pipe bank (14; 14a) has a change of direction.

## Revendications

1. Module de contrôle de température d'une âme en béton, présentant
a) une armature statique (3),
b) au moins une grille de support (8),
c) un tubage (9) de contrôle de température et
d) une couche de béton (13) qui entoure au moins en partie une grille de support (8),
e) l'armature (3) étant configurée comme grille constituée de barres d'acier (4) distinctes, l'épaisseur des barres d'acier (4) et la trame de la grille étant conçues en correspondance aux spécifications statiques,
f) le tubage (9) étant configuré comme l'ensemble de tubes (14; 14a) indéformable et dépourvu de croisements, **caractérisé en ce que**
g) le tubage (9) et la ou les grilles de support (8) sont placés sur un même côté de l'armature (3), essentiellement directement contre l'armature (3) et
h) au niveau des renvois (17; 17a) dans lesquels un conduit tubulaire (10) de l'ensemble de tubes (14, 14a) présente un changement de direction, l'ensemble de tubes (14; 14a) présente des éléments façonnés dont certaines parties sont stabilisantes.

2. Module de contrôle de température d'une âme en béton selon la revendication 1, **caractérisé en ce que** l'ensemble de tubes (14; 14a) contient des conduits tubulaires voisins (10) et **en ce que** des pinces d'écartement (11, 12) sont disposées entre les conduits tubulaires voisins (10) pour garantir l'écart de pose.

3. Module de contrôle de température d'une âme en béton selon la revendication 2, **caractérisé en ce que** les pinces d'écartement (12) disposées entre les conduits tubulaires voisins (10) sont passées par des espaces intermédiaires libres (24) de la grille de support (8).

4. Procédé de fabrication d'un module de contrôle de température d'une âme en béton, dans lequel :
a) une armature statique (3) est réalisée,
b) au moins une grille de support (8) est placée sur l'armature statique (3),
c) un tubage (9) de contrôle de température est placé sur l'armature statique (3) et
d) l'armature statique (3), le tubage (9) et la ou les grilles de support (8) sont englobés dans du béton, de telle sorte que la ou les grilles de support (8) ressortent au moins en partie du béton, dans lequel
e) l'armature (3) est réalisée sous la forme d'une grille constituée de barreaux d'acier (4) distincts, l'épaisseur des barreaux d'acier (4) et le pas de la grille étant dimensionnés en correspondance aux spécifications statiques,
f) le tubage (9) est réalisé sous la forme d'un ensemble de tubes (14; 14a) indéformable et est fixé sur un tapis de support (25) multivoies,
g) l'ensemble de tubes (14; 14a) fixé sur le tapis de support (25) multivoies est transporté vers l'armature (3) et est disposé au-dessus de l'armature (3) ou sur celle-ci et
h) le tapis de support (25) multivoies est libéré de l'ensemble de tubes (14, 14a) et est enlevé.

5. Procédé selon la revendication 4, **caractérisé en ce que** la ou les grilles de support (8) sont placées sur l'armature (3) avant le tubage (9).

6. Procédé selon la revendication 4, **caractérisé en ce que** le tubage (9) est placé sur l'armature (3) avant la ou les grilles de support (8).

7. Procédé selon la revendication 4, **caractérisé en ce que** des conduits tubulaires (10) voisins de l'ensemble de tubes (14; 14a) sont immobilisés les uns par rapport aux autres à leur écart de pose.

8. Procédé selon la revendication 7, **caractérisé en ce que** la fixation de l'écart de pose est réalisée au moins en partie en passant des pinces d'écarteur (12) à travers les espaces intermédiaires libres (24) de la grille de support (8) et sont fixés sur des conduits tubulaires (10) qui s'étendent longitudinalement sur les deux côtés de la grille de support (8).

9. Procédé selon la revendication 4, **caractérisé en ce que** l'ensemble de tubes (14; 14a), en particulier au niveau des renvois (17; 17a) dans lesquels un conduit tubulaire (10) de l'ensemble de tubes (14; 14a) subit un changement de direction, est fixé sur l'armature (3).
